## Europäisches Patentamt
## European Patent Office
## Office européen des brevets

(19)

(11) Veröffentlichungsnummer : **0 127 825**
**B1**

(12) **EUROPÄISCHE PATENTSCHRIFT**

(45) Veröffentlichungstag der Patentschrift :
26.04.89

(51) Int. Cl.⁴ : **F 01 K 23/06**, F 02 C   3/28

(21) Anmeldenummer : 84105697.1

(22) Anmeldetag : 18.05.84

(54) Kraftwerk mit einer integrierten Kohlevergasungsanlage.

(30) Priorität : 03.06.83 DE 3320228

(43) Veröffentlichungstag der Anmeldung :
12.12.84 Patentblatt 84/50

(45) Bekanntmachung des Hinweises auf die Patenterteilung : 26.04.89 Patentblatt 89/17

(84) Benannte Vertragsstaaten :
AT BE CH DE FR GB IT LI LU NL SE

(56) Entgegenhaltungen :
EP--A-- 0 038 138
DE--A-- 2 246 407
DE--A-- 2 425 939
GB--A-- 2 029 855
US--A-- 3 868 817
ENERGYGRAM, TECHNICAL NOTE PB81-970603,
Technical Information Center US Department of
Energy, Oak Ridge Tennessee, US: "Coal-gasification plant for making synthesis gas for ammonia
production"

(73) Patentinhaber : Siemens Aktiengesellschaft Berlin
und München
Wittelsbacherplatz 2
D-8000 München 2 (DE)

(72) Erfinder : Müller, Rainer, Dr.
Herdegenplatz 1
D-8520 Erlangen (DE)
Erfinder : Schiffers, Ulrich, Dr.
Moritzbergstrasse 1
D-8501 Eckental (DE)

EP 0 127 825 B1

## Beschreibung

Die Erfindung bezieht sich auf ein Kraftwerk mit einer integrierten Kohlevergasungsanlage, mit einem Kohlevergaser, einer am Kohleyergaser angeschlossenen Wärmetauscher- und Gasentstaubungsanlage, einem an die Wärmetauscher- und Gasentstaubungsanlage anschlossenen Gasturbinen und Dampfkraftwerkteil sowie mit einer Ammoniaksyntheseanlage, die an die Kohlevergasungsanlage unter Zwischenschaltung einer Gasreinigungsanlage, einer Konvertierungsanlage und einer der Konvertierungsanlage nachgeschalteten Gaszerlegungsanlage angeschlossen ist, wobei die in der Gasreinigungsanlage abgetrennten Gase und ein Teil des entstaubten Rohgases des Kohlevergasers der Brennkammer des Gasturbinenkraftwerkteils zugeleitet werden.

Die deutsche Offenlegungsschrift 31 14 984 offenbart ein Kraftwerk, bei dem eine Gasturbine von einer Kohlevergasungsanlage mit einem kohlenmonoxyd- und wasserstoffhaltigen Synthesegas versorgt wird. Die Gasturbine treibt einen elektrischen Generator an. Die heißen Abgase der Gasturbine werden bei diesem Kraftwerk zur Dampferzeugung herangezogen. Mit dem Dampf wird eine Dampfturbine und ein weiterer elektrischer Generator angetrieben. Ein Teil des Synthesegases wird bei diesem Kraftwerk einer Methanolsyntheseanlage zugeführt. Das erzeugte Methanol wird gespeichert und zum Ausgleich von Lastspitzen zusätzlich zum Mischgas in der Gasturbine verbrannt. Dieses Kraftwerk erlaubt es, in Zeiten von Schwachlast verstärkt Methanol zu erzeugen und das so erzeugte Methanol, sofern es nicht zum Ausgleich von Spitzenlast benötigt wird, als Chemierohstoff zu verkaufen. Abgesehen davon, daß bei häufigem Ausfahren von Lastspitzen nur ein geringer Teil des erzeugten Methanols frei verfügbar ist, liegen die Gestehungskosten für das Methanol nicht wesentlich unter denen entsprechender kraftwerksunabhängiger Herstellverfahren.

Durch die DE-OS 22 46 407 ist ein Verfahren zur Stromerzeugung bekannt, bei dem einem mit vorgewärmter Luft betriebenen Kohlevergaser ein Abhitzekessel zur Erzeugung von Hochdruckdampf nachgeschaltet ist und das abgekühlte Gas des Kohlevergasers über eine Gasentstaubungsanlage eine Entschwefelungsanlage einerseits einer Methanisierungsanlage und nachgeschalteter Gaszerlegungsanlage andererseits einer Konvertierungsanlage mit nachgeschalteter Gaszerlegungsanlage und drittens der Brennkammer einer Gasturbinenanlage zugeleitet wird. Hierbei kann der der Konvertierungsanlage nachgeschalteten Gaszerlegungsanlage entnommene Wasserstoff und Stickstoffgas im Verhältnis 3 : 1 gemischt werden, um es einer Ammoniaksynthese zuzuführen, wobei der überschüssige Stickstoff verworfen wird. Mit einem solchen Kraftwerk läßt sich zwar eine Kohlevergasungsanlage im Mittellastbetrieb fahren, der Anlageaufwand ist jedoch erheblich.

Der vorliegenden Erfindung liegt die Aufgabe zugrunde, die Wirtschaftlichkeit eines solchen Kraftwerkes zu verbessern und dabei möglichst preisgünstig Chemierohstoffe herzustellen.

Bei einem Kraftwerk der eingangs genannten Art werden daher erfindungsgemäß die Gasreinigungsanlage zwischen der Konvertierungsanlage und der Gaszerlegungsanlage geschaltet ist und ein Teil des bei der Ammoniaksynthese anfallenden Abgases als sogenanntes Purgegas zusammen mit den in der Gaszerlegungsanlage abgetrennten Gasen der Brennkammer des Gasturbinenkraftwerksteils zugeleitet und ist dem Kohlevergaser eine Luftzerlegungsanlage vorgeschaltet, deren Sauerstoffleitung an dem Kohlevergaser angeschlossen ist und deren Stickstoffleitung mit der zur Brennkammer der Gasturbine führenden Brenngasleitung und mit der Gaszerlegungsanlage verbunden ist. Hiermit ist der Vorteil verbunden, daß die getrennte Erzeugung von Prozeßdampf und Strom im konventionellen Kraftwerk einerseits und im Chemiewerk andererseits vermieden wird und daß der Kohlevergaser auch in Schwachlastzeiten noch im wirtschaftlichen Bereich betrieben werden kann. Schließlich können so die chemischen und thermischen Energien der Restgase aus den verschiedenen Umsetzungsstufen in der Gasturbine thermodynamisch vorteilhaft genutzt werden. Darüber hinaus werden die Aufwendungen für den Kohlevergaser, die Konvertierungsanlage, die Gasreinigungsanlage und Gaszerlegungsanlage vermindert, wenn der Kohlevergaser nur mit reinem Sauerstoff betrieben wird.

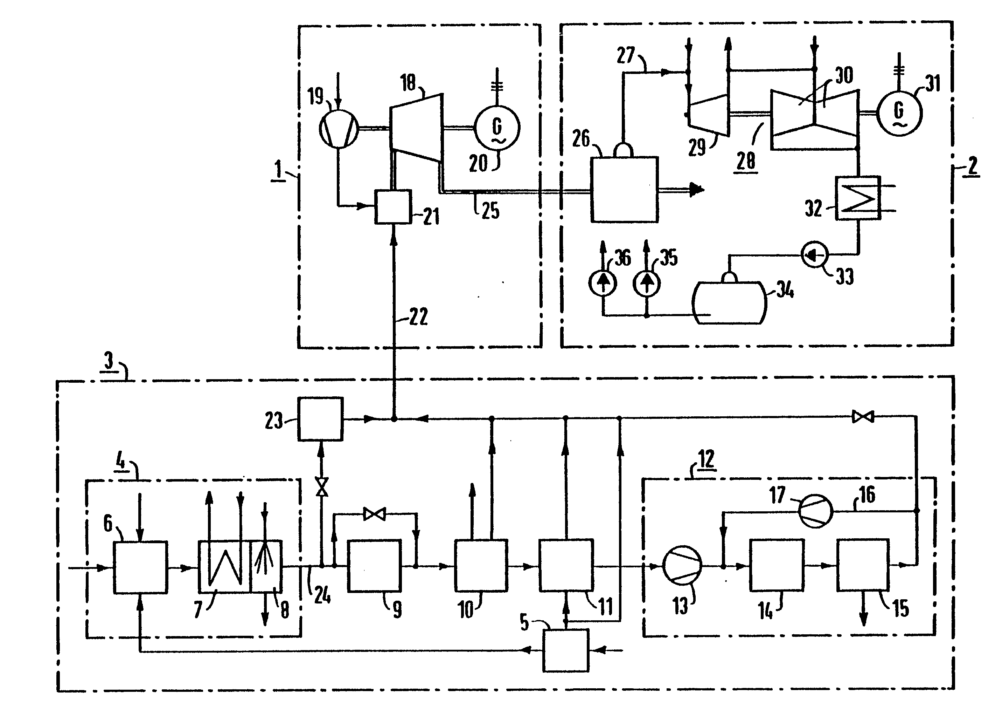

Weitere Einzelheiten der Erfindung werden anhand eines in der Figur dargestellten Ausführungsbeispiels erläutert. Es zeigt :

Die einzige Figur ein erfindungsgemäßes Kraftwerk in schematischer Darstellung.

Die schematische Darstellung der Figur verdeutlicht, daß sich das Kraftwerk aus einem Gasturbinenkraftwerksteil 1, einem Dampfkraftwerksteil 2 und einer Anlage 3 zur Herstellung von Chemierohstoffen zusammensetzt. Die Anlage 3 zur Herstellung von Chemierohstoffen beinhaltet eine Kohlevergasungsanlage 4, die eine Luftzerlegungsanlage 5, eine dem Kohlevergaser 6 angeschlossene Wärmetauscheranlage 7 und eine Gasentstaubungsanlage 8 umfaßt. Zur Anlage zur Herstellung von Chemierohstoffen gehören außerdem eine Konvertierungsanlage 9, eine Gasreinigungsanlage 10 und eine Gaszerlegungsanlage 11, an der eine Anlage 12 zur Ammoniaksynthese angeschlossen ist. Letztere beinhaltet einen Gasverdichter 13, einen Ammoniaksynthesereaktor 14, einen Ammoniakkühle und Gasabscheider 15 sowie eine Rezirkulationsleitung 16 für die nichtumgesetzten Syntheseabgase mit einem zwischengeschalteten Verdichter 17.

Im Gasturbinenkraftwerksteil 1 ist eine Gasturbine 18, die einen Verdichter 19 und einen Generator 20 antreibt, zu erkennen. Der Gasturbine 18 ist eine Brennkammer 21 vorgeschaltet, die einerseits über eine Brenngasleitung 22 von der Anlage 4 zur Erzeugung von Chemierohstoffen mit Brenngas und andererseits vom Verdichter 19 mit Luft versorgt wird. Die Brenngasleitung 22 ist im Ausführungsbeispiel über eine Gaswaschanlage 23 an der die Kohlevergasungsanlage 4 mit der Konvertierungsanlage 9 verbindenden Rohgasleitung 24 sowie an die Stickstoffleitung der Luftzerlegungsanlage 5 angeschlossen.

An die Abgasleitung 25 der Gasturbine 18 ist ein Abhitzekessel 26 angeschlossen. Die Dampfleitung 27 des Abhitzekessels ist mit der Dampfturbine 28 des Dampfkraftwerksteils 3 verbunden. Die Dampfturbine besteht im Ausführungsbeispiel aus einem Hochdruckteil 29 und einem Niederdruckteil 30. Sie ist mit einem Generator 31 gekuppelt. An dem Niederdruckteil der Dampfturbine 28 schließen sich ein Kondensator 32, eine Kondensatorpumpe 33, ein Speisewasserbehälter 34 und verschiedene Speisewasserpumpen 35, 36 an.

Dem Kohlevergaser 6 wird Kohle und aus der vorgeschalteten Luftzerlegungsanlage 5 Sauerstoff zugeführt. Außerdem wird in den Kohlevergaser Prozeßdampf eingebracht. Die Kohle wird mit Hilfe des Sauerstoffes und des Prozeßdampfes zu einem im wesentlichen kohlenmonoxyd- und wasserstoffhaltigen Rohgas vergast. Dieses Rohgas wird in der am Kohlevergaser 6 angeschlossenen Wärmetauscheranlage 7 abgekühlt. Die in der Wärmetauscheranlage freiwerdende Wärme wird zur Erzeugung von Dampf verwendet. Sodann wird das Rohgas in der Gasentstaubungsanlage 8 mit Hilfe von Wasser von den mitgeführten Staubpartikeln befreit. Dabei wird es mit Wasserdampf beladen. Das so gereinigte Rohgas kann je nach Betriebsweise des Kraftwerks zu unterschiedlichen Teilen der Bremkammer 21 der Gasturbine 18 und den weiteren Verarbeitungsstufen innerhalb der Anlage 3 zur Herstellung von Chemierohstoffen zugeleitet werden.

In der Anlage 3 zur Herstellung von Chemierohstoffen wird das Rohgas zunächst über eine Konvertierungsanlage 9 geführt. In ihr wird das im Rohgas enthaltene Kohlenmonoxyd mit Wasser zu Wasserstoff und Kohlendioxyd umgesetzt. Das Kohlendioxyd und der mitgeführte Schwefelwasserstoff werden in der nachgeschalteten Gasreinigungsanlage 10 nach technisch bekannten Verfahren entfernt. Das so gereinigte, im wesentlichen nur Wasserstoff und je nach Konvertierungsgrad mehr oder weniger stark kohlenmonoxydhaltige Gas wird in der Gaszerlegungsanlage 11 mit dem von der Luftzerlegungsanlage 6 gelieferten flüssigen Stickstoff von allen anderen Gasen mit Ausnahme von Wasserstoff gereinigt und dabei zugleich mit Stickstoff angereichert. Hierbei soll sich am Ausgang der Gaszerlegungsanlage ein Verhältnis von Wasserstoff zu Stickstoff wie 3 : 1 einstellen. Dieses Synthesegas wird der Anlage 12 zur Ammoniaksynthese zugeleitet. Dort wird es zunächst über den Gasverdichter 13 auf Prozeßdruck verdichtet und dann in den Ammoniaksynthesereaktor 14 eingeleitet. Die den Ammoniaksynthesereaktor verlassenden, nicht vollständig umgesetzten ammoniakhaltigen Gase werden in einem nachgeschalteten Gasabscheider 15 gekühlt. Dabei wird das Ammoniak auskondensiert. Die Abgase werden über die Rezirkulationsleitung 16 wieder in den Ammoniaksynthesereaktor 14 zurückbefördert. Ein Teil der rezirkulierten Abgase wird als sogenanntes Purgegas mit den nicht umsetzbarem Gasbestandteilen in die Brenngasleitung 22 abgeführt und zusammen mit dem Rohgas in der Brennkammer 21 der Gasturbine 18 verbrannt. Auch die Restgase der Gaszerlegungsanlage 11 und der Gasreinigungsanlage 10 werden in die Brenngasleitung abgeführt und zusammen mit dem Rohgas verbrannt. Die heißen Abgase der Gasturbine 18 werden durch den Abhitzekessel 26 geleitet und geben dort den größten Teil ihrer Wärme ab. Im Abhitzekessel wird mit dem von der Speisewasserpumpe 35 gelieferten Wasser Frischdampf erzeugt. Dieser Dampf wird zusammen mit dem in der Wärmetauscheranlage 7 gelieferten Dampf der Dampfturbine 28 zugeleitet. Den entsprechenden Druckstufen der Dampfturbine 28 wird der Prozeßdampf entnommen, der für den Betrieb des Kohlevergasers und für verschiedene Umsetzungsstufen benötigt wird. Der in der Dampfturbine 28 entspannte Dampf wird im Kondensator 32 kondensiert und als Speisewasser über die Kondensatpumpe 33 dem Speisewasserbehälter 34 zugeführt.

Bei der Verwendung stark schwefelhaltiger Kohle empfiehlt es sich, die Gaswaschanlage 23 in die von der Gasentstaubungsanlage 8 zur Brennkammer 21 der Gasturbine führenden Brenngasleitung 22 einzubauen, um die zulässigen Emissionswerte für Schwefel in den Abgasen der Gasturbine zu unterschreiten. Hierzu genügt eine einfache Anlage, mit der Schwefelwasserstoff mit einem geeigneten Lösungsmittel ausgewaschen wird.

Bei stark schwefelhaltiger Kohle kann es auch vorteilhaft sein, das die Entstaubungsanlage 8 verlassende abgekühlte Rohgas unter teilweiser Umgehung der Konvertierungsanlage 9 der Gasreinigungsanlage 10 und Gaszerlegungsanlage 11 zuzuleiten. Dies hat zur Folge, daß in der Gaszerlegungsanlage 11 wesentlich mehr Kohlenmonoxyd und weniger Wasserstoff anfällt. Somit kann der Brennkammer 21 mehr schwefelfreies, kohlenmonoxydhaltiges Gas zugeleitet werden. Dafür steht der Anlage 12 zur Ammoniaksynthese weniger Synthesegas zur Verfügung. Dabei ist es von Vorteil, daß der Aufwand für die Konvertierung gegenüber de Ammoniakherstellung im Chemiewerk verringert ist oder gar ganz entfallen kann. Damit ist auch ein geringerer Verlust an brennbaren Gasen verbunden. Schließlich wird bei diesem Kraftwerk mit integrierter Anlage 12 zur Ammoniaksynthese auch der sonst zu treibende Aufwand für die $CO_2$-Entfernung und Gaszerlegung geringer, weil diese Gase mit dem Abgas der Ammoniaksynthese der Brennkammer 21 der Gasturbine 18 zugeleitet werden und ihr Energieinhalt somit trotzdem nicht verloren geht. Bei dieser Konzeption des Kraftwerks ist es außerdem

möglich, die NO$_x$-Emission dadurch abzusenken, daß man Stickstoff von der Luftzerlegungsanlage 5 dem Brenngas in der Brenngasleitung beimischt.

**Patentansprüche**

1. Kraftwerk mit einer integrierten Kohlevergasungsanlage (4), mit einem Kohlevergaser (6), einer am Kohlevergaser angeschlossenen Wärmetauscher- (7) und Gasentstaubungsanlage (8), einem an die Wärmetauscher- und Gasentstaubungsanlage angeschlossenen Gasturbinen- (1) und Dampfkraftwerksteil (2) sowie mit einer Ammoniaksyntheseanlage (12), die an die Kohlegasungsanlage (4) unter Zwischenschaltung einer Gasreinigungsanlage (10), einer Konvertierungsanlage (9) und einer der Konvertierungsanlage nachgeschalteten Gaszerlegungsanlage (11) angeschlossen ist, wobei die in der Gasreinigungsanlage abgetrennten Gase und ein Teil des entstaubten Rohgases des Kohlevergasers (6) der Brennkammer (21) des Gasturbinenkraftwerksteils (1) zugeleitet werden, dadurch gekennzeichnet, daß die Gasreinigungsanlage zwischen der Konvertierungsanlage und der Gaszerlegungsanlage geschaltet ist und ein Teil des bei der Ammoniaksynthese anfallenden Abgases als sogenanntes Purgegas zusammen mit den in der Gaszerlegungsanlage abgetrennten Gasen der Brennkammer des Gasturbinenkraftteils zugeleitet werden und. dem Kohlevergaser eine Luftzerlegungsanlage (5) vorgeschaltet ist, deren Sauerstoffleitung am Kohlevergaser angeschlossen und deren Stickstoffleitung mit der zur Brennkammer (21) der Gasturbine (18) führenden Brenngasleitung (22) und mit der Gaszerlegungsanlage (11) verbunden ist.

2. Kraftwerk nach Anspruch 1, dadurch gekennzeichnet, daß der Stickstoff aus der Luftzerlegungsanlage (5) der Gaszerlegungsanlage (11) in flüssiger Form zugeleitet wird.

3. Kraftwerk nach Anspruch 1, dadurch gekennzeichnet, daß das dem Gasturbinenkraftwerksteil (1) zuströmende Rohgas über eine Gasreinigungsanlage (23) leitbar ist.

4. Kraftwerk nach Anspruch 3, dadurch gekennzeichnet, daß als Gasreinigungsanlage eine Gaswaschanlage (23) für Schwefelwasserstoff verwendet ist.

**Claims**

1. Power station with an integrated coal gasification plant (4), with a coal gasifier (6), a heat exchanger plant (7) and plant (8) for removing dust from the gas, connected to the coal gasifier, a gas turbine (1) and steam power station section (2) connected to the heat exchanger plant and plant for removing dust from the gas and also with an ammonia synthesis plant (12) which is connected to the coal gasification plant (4) with the interposition of a gas purification plant (10), a conversion plant (9) and a gas separation plant (11), connected downstream of the conversion plant, the gases separated in the gas purification plant and a portion of the dust-free crude gas of the coal gasifier (6) being conducted to the combustion chamber (21) of the gas turbine power station section (1), characterised in that the gas purification plant is connected between the conversion plant and the gas separation plant and a portion of the waste gas produced during the ammonia synthesis is conducted as a so-called purge gas together with the gases separated in the gas separation plant to the combustion chamber of the gas turbine power station section and there is connected upstream of the coal gasifier an air separation plant (5), the oxygen line of which is connected to the coal gasifier and the nitrogen line of which is linked with the combustion gas line (22), leading to the combustion chamber (21) of the gas turbine (18), and with the gas separation plant (11).

2. Power station according to claim 1, characterised in that the nitrogen from the air separation plant (5) is conducted to the gas separation plant (11) in liquid form.

3. Power station according to claim 1, characterised in that the crude gas flowing towards the gas turbine power station section (1) can be conducted via a gas purification plant (23).

4. Power station according to claim 3, characterised in that a gas washing plant (23) for hydrogen sulphide is used as a gas purification plant.

**Revendications**

1. Centrale de production d'électricité comprenant une installation intégrée de gazéification du charbon (4), ayant un gazéificateur de charbon (6) et une installation à échangeur de chaleur (7) et de dépoussiérage des gaz (8) raccordée au gazéificateur de charbon, une partie de centrale à turbine à gaz (1) et une partie de centrale à turbine à vapeur (2) raccordées à l'installation à échangeur de chaleur et de dépoussiérage des gaz, ainsi qu'une installation de synthèse de l'ammoniac (12) qui est raccordée à l'installation de gazéification du charbon (4), avec interposition d'une installation d'épuration du gaz (10), d'une installation de conversion (9) et d'une installation de fractionnement des gaz (11) montée en aval de l'installation de conversion, les gaz séparés dans l'installation d'épuration des gaz et une partie du gaz brut dépoussiérée du gazéificateur de charbon (6) étant envoyés à la chambre de combustion (21) de la partie de centrale à turbine à gaz (1), caractérisée en ce que l'installation d'épuration des gaz est montée entre l'installation de conversion et l'installation de fractionnement des gaz, et une partie de l'effluent gazeux se produisant lors de la synthèse de l'ammoniac est envoyée, à titre de ce que l'on appelle du gaz de purge, en même temps que les gaz séparés dans l'installation de fractionnement des gaz, à la chambre de combustion de la partie de la centrale à turbine à gaz, et en amont du gazéificateur de charbon, est montée une installation de fractionnement de l'air (5), dont le conduit pour l'oxygène est raccordé au gazéificateur de charbon et dont le conduit pour l'azote communique avec le conduit pour le gaz de combustion (22) menant à la chambre de combustion (21) de la turbine à gaz (18) et avec l'installation de fractionnement des gaz (11).

2. Centrale suivant la revendication 1, caractérisée en ce que l'azote est envoyé sous forme liquide de l'installation de fractionnement de l'air (5) à l'installation de fractionnement des gaz (11).

3. Centrale suivant la revendication 1, caractérisée en ce que le gaz brut affluent à la partie de centrale à turbine à gaz (1) peut être envoyé dans une installation d'épuration des gaz (23).

4. Centrale suivant la revendication 3, caractérisée en ce que l'on utilise, comme installation d'épuration des gaz, une installation de lavage de gaz (23), pour l'hydrogène sulfuré.

EP 0 127 825 B1